# EUROPEAN PATENT APPLICATION

(11) **EP 4 436 001 A2**
(43) Date of publication of application: **25.09.2024**
(21) Application number: 24164094.5
(22) Date of filing: 18.03.2024
(51) Int. Cl.: H02J 7/00, H05K 7/20

(54) **BATTERY CHARGER**

(30) Priority: 24.03.2023 US 202363492115 P
(71) Applicant: Milwaukee Electric Tool Corporation, Brookfield, WI 53005 (US)
(72) Inventor: SNYDER, Joel D., Menomonee Falls 53051 (US); VASHI, Bhaumik M., Shorewood 53211 (US); NAGAL, Vivek S., Sussex 53089 (US); WANG, Xuechao, Pewaukee 53072 (US)
(74) Representative: Forresters IP LLP

(57) **Abstract**

A battery charger includes a housing defining a first end, second end, front side, rear side, top side, and bottom side. The housing also defines a first support structure to selectively couple to a battery pack and a second support structure to selectively couple to the battery pack. The housing further defines a first air inlet located in the front side and a second air inlet located in the rear side. The housing also defines a first air outlet located in the first end and a second air outlet located in the second end. Charger electronics are supported in the housing and operable to output a charging current to charge the battery pack. A fan is operable to generate an airflow through the housing. The airflow extends from the first air inlet and the second air inlet to the first air outlet and the second air outlet.

## Description

### CROSS-REFERENCE TO RELATED APPLICATIONS

The present application claims priority to U.S. Provisional Patent Application No. 63/492,115 filed March 24, 2023, the entire contents of which are incorporated herein.

### FIELD

The present disclosure relates to battery chargers and, more particularly, to cooling a battery charger.

### SUMMARY

In one independent embodiment, a battery charger includes a housing defining a first end, a second end opposite the first end, a front side, a rear side opposite the front side, a top side, and a bottom side opposite the top side. The housing also defines a first support structure configured to selectively couple to a battery pack, and a second support structure configured to selectively couple to the battery pack. The housing further defines a first air inlet located in the front side and a second air inlet located in the rear side. The housing also defines a first air outlet located in the first end and a second air outlet located in the second end. The battery charger also includes charger electronics supported in the housing and operable to output a charging current to charge the battery pack. The battery charger further includes a fan operable to generate an airflow through the housing, the airflow extending from the first air inlet and the second air inlet to the first air outlet and the second air outlet.

In embodiments the housing may include an upper housing member that defines the top side and a lower housing member that defines the bottom side, the lower housing member being removably coupled to the upper housing member; and
the first air outlet and the second air outlet may be defined by the lower housing member.

In embodiments the housing may further include a first handle member provided at the front side and a second handle member provided at the rear side, and wherein the first handle member may define the first air inlet and the second handle member may define the second air inlet.

In embodiments the housing may further include an interior housing member positioned between the upper housing member and the lower housing member;
the charger electronics may include a first printed circuit board assembly (PCBA) supported by the lower housing member and a second PCBA supported by the interior housing member; and
wherein the airflow may pass by the second PCBA before the airflow passes by the first PCBA.

In embodiments the interior housing member may support the fan.

In embodiments the housing may further define a first axis extending between the first end and the second end, a second axis extending between the front side and the rear side, and a third axis extending between the top side and the bottom side, with the first axis, the second axis, and the third axis being orthogonal to one another, and
the first air outlet and the second air outlet may each be oriented facing normal to the first axis.

In embodiments a largest dimension of the housing may be measured between the first end and the second end along the first axis.

In another independent embodiment, a battery charger includes a housing defining a first end, a second end opposite the first end, a front side, a rear side opposite the front side, a top side, and a bottom side opposite the top side. The housing also defines a first support structure located in the top side and configured to selectively couple to a battery pack, and a second support structure located in the top side and configured to selectively couple to the battery pack. The housing further defines a first air inlet located in the bottom side and under the first support structure, and a second air inlet located in the bottom side and under the second support structure. The housing also defines a first air outlet located in the top side adjacent the first support structure and a second air outlet located in the top side adjacent the second support structure. The battery charger also includes charger electronics supported in the housing and operable to output a charging current to charge the battery pack. The battery charger further includes a first fan assembly operable to generate a first airflow extending from the first air inlet to the first air outlet, the first fan assembly including a first fan adjacent the first air inlet and a first duct coupled to the first fan, the first duct extending from the first fan to the first air outlet. The battery charger also includes a second fan assembly operable to generate a second airflow extending from the second air inlet to the second air outlet, the second fan assembly including a second fan adjacent the second air inlet and a second duct coupled to the second fan, the second duct extending from the second fan to the second air outlet. The first air outlet directs the first airflow over the battery pack when the battery pack is coupled to the first support structure. The second air outlet directs the second airflow over the battery pack when the battery pack is coupled to the second support structure.

In embodiments the first air outlet may be defined by a first plurality of slots formed in the top side of the housing and may be located adjacent the first support structure.

In embodiments the first plurality of slots may extend on both lateral sides of the first support structure.

In embodiments the housing may further define a first axis extending between the first end and the second end, a second axis extending between the front side and the rear side, and a third axis extending between the top side and the bottom side, with the first axis, the second axis, and the third axis being orthogonal to one another, and
wherein the first air inlet, the second air inlet, the first air outlet, and the second air outlet may each be oriented facing normal to the third axis.

In embodiments a largest dimension of the housing may be measured between the first end and the second end along the first axis.

In embodiments the battery charger may further comprise a first terminal block supported by the housing adjacent the first support structure and configured to selectively couple to the battery pack, and wherein the first fan assembly may direct the first airflow over the first terminal block.

In embodiments the charger electronics may include a microcontroller configured to monitor a temperature of the battery pack and activate the first fan in response to the temperature of the battery pack exceeding a predetermined temperature.

In yet another independent embodiment, a battery charger includes a housing defining a first end, a second end opposite the first end, a front side, a rear side opposite the front side, a top side, and a bottom side opposite the top side. The housing also defines a support structure located in the top side and configured to selectively couple to a battery pack. The housing further defines a first air inlet located in the bottom side and under the support structure, and a first air outlet located in the top side adjacent the support structure. The housing also defines a second air inlet located in at least one of the front side and the rear side, and a second air outlet located in at least one of the first end and the second end. The battery charger also includes charger electronics supported in the housing and operable to output a charging current to charge the battery pack. The battery charger further includes a first fan assembly operable to generate a first airflow extending from the first air inlet to the first air outlet, the first fan assembly including a first fan adjacent the first air inlet and a duct coupled to the first fan, the duct extending from the first fan to the first air outlet. The battery charger also includes a second fan operable to generate a second airflow through the housing, the second airflow extending from the second air inlet to the second air outlet. The duct separates the first airflow from the second airflow.

In embodiments the housing may include an upper housing member that defines the top side and a lower housing member that defines the bottom side, the lower housing member being removably coupled to the upper housing member;
the first air inlet and the second air outlet may be defined by the lower housing member; and
the first air outlet may be defined by the upper housing member.

In embodiments the housing may further define a first axis extending between the first end and the second end, a second axis extending between the front side and the rear side, and a third axis extending between the top side and the bottom side, with the first axis, the second axis, and the third axis being orthogonal to one another, and
wherein the first air inlet and the first air outlet may each be oriented facing normal to the third axis.

In embodiments a largest dimension of the housing may be measured between the first end and the second end along the first axis, and wherein the second air outlet may be oriented facing normal to the first axis.

In embodiments the first air outlet may be defined by a first plurality of slots formed in the top side of the housing and located adjacent the support structure.

In embodiments the first plurality of slots may extend on both lateral sides of the support structure.

### BRIEF DESCRIPTION OF THE DRAWINGS

FIG. 1 is a perspective view of a battery charger.

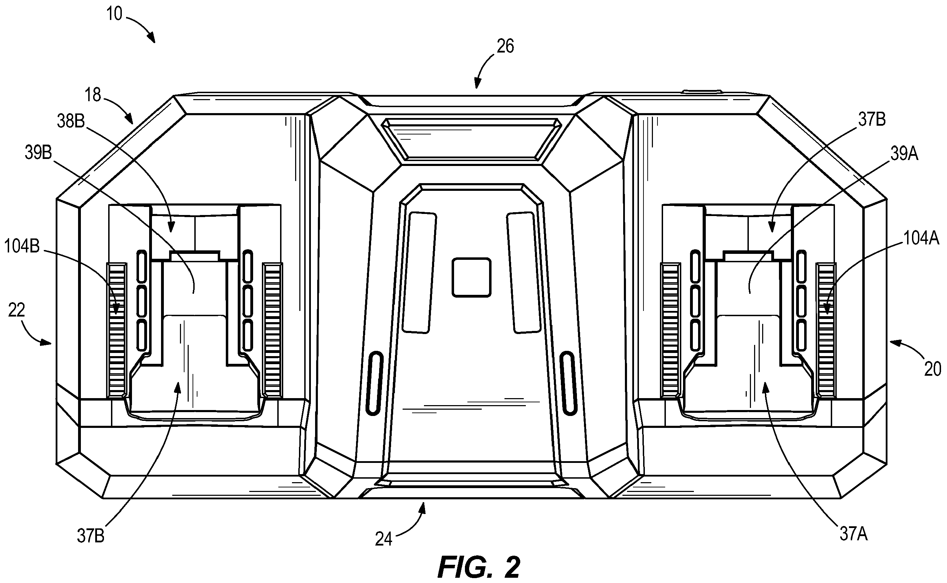

FIG. 2 is a top view of the battery charger of FIG. 1.
FIG. 3 is a top view of a charging bay of a battery charger according to another embodiment.
FIG. 4 is a perspective view of a battery pack of a first type.
FIG. 5 is a perspective view of a battery pack of a second type.
FIG. 6 is a perspective view of the battery charger of FIG. 1.
FIGS. 7 and 8 are partially exploded perspective views of the battery charger of FIG. 1.
FIG. 9 is a perspective view of portions of the battery charger of FIG. 1.
FIGS. 10 and 11 are perspective views of an interior housing portion of the battery charger of FIG. 1.
FIGS. 12 and 13 are a perspective view of an exploded perspective view, respectively, of a battery fan assembly of the battery charger of FIG. 1.
FIG. 14 is a perspective view of a portion of the battery fan assembly of FIG. 12.
FIG. 15 is a cross-sectional view of the battery charger of FIG. 1, taken along lines 15-15 of FIG. 1.
FIG. 16 is a cross-sectional view of the battery charger of FIG. 1, taken along lines 16-16 of FIG. 1.

### DETAILED DESCRIPTION

Before any independent embodiments of the disclosure are explained in detail, it is to be understood that the disclosure is not limited in its application to the details of construction and the arrangement of components set forth in the following description or illustrated in the following drawings. The disclosure is capable of other independent embodiments and of being practiced or of being carried out in various ways.

Use of "including" and "comprising" and variations thereof as used herein is meant to encompass the items listed thereafter and equivalents thereof as well as additional items. Use of "consisting of' and variations thereof as used herein is meant to encompass only the items listed thereafter and equivalents thereof.

Relative terminology, such as, for example, "about", "approximately", "substantially", etc., used in connection with a quantity or condition would be understood by those of ordinary skill to be inclusive of the stated value and has the meaning dictated by the context (for example, the term includes at least the degree of error associated with the measurement of, tolerances (e.g., manufacturing, assembly, use, etc.) associated with the particular value, etc.). Such terminology should also be considered as disclosing the range defined by the absolute values of the two endpoints. For example, the expression "from about 2 to about 4" also discloses the range "from 2 to 4." The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

Furthermore, some embodiments described herein may include one or more electronic processors configured to perform the described functionality by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

Many of the modules and logical structures described are capable of being implemented in software executed by a microprocessor or a similar device or of being implemented in hardware using a variety of components including, for example, application specific integrated circuits ("ASICs"). Terms like "controller" and "module" may include or refer to both hardware and/or software. Capitalized terms conform to common practices and help correlate the description with the coding examples, equations, and/or drawings. However, no specific meaning is implied or should be inferred simply due to the use of capitalization. Thus, the claims should not be limited to the specific examples or terminology or to any specific hardware or software implementation or combination of software or hardware.

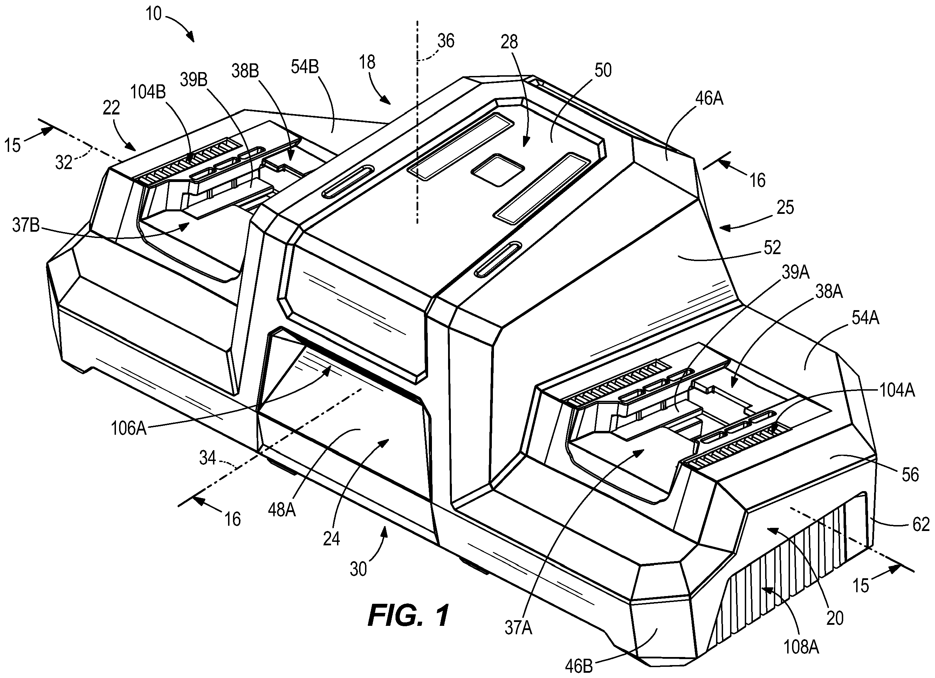

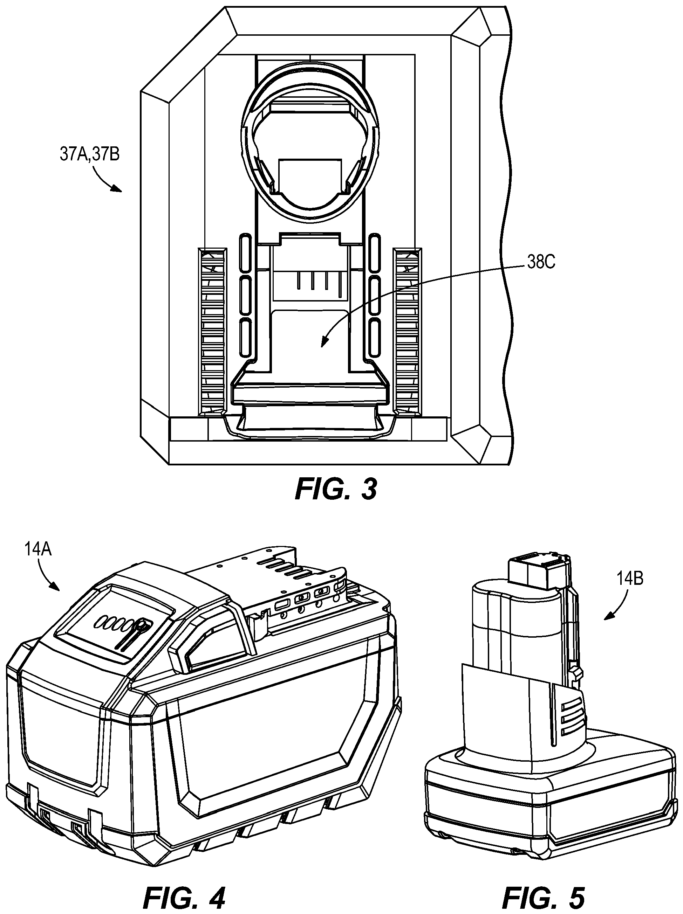

FIG. 1 illustrates a battery charger 10 operable to charge a battery pack, and further operable to provide active cooling to both the battery charger 10 itself and to the battery pack. In the illustrated construction, the battery charger 10 is operable to charge a first battery pack 14A of a first type (FIG. 4). More specifically, the battery charger 10 is operable to charge two first battery packs 14A of the first type simultaneously. In other constructions, such as that shown in FIG. 3, the battery charger 10 may also be operable to charge a second battery pack 14B of a second type (FIG. 5). The illustrated battery charger 10 may be operable to charge a high output battery pack (e.g., having a current capacity of 12 amp-hours (Ah) or more), which requires about 3 times the power of typical chargers, in as little as 60 minutes.

The battery pack type may be defined by nominal voltage, current capacity, connection configuration (e.g., "tower" vs. "slide-on", or two different slide-on interfaces), etc., of the battery pack 14A, 14B. For example, the first battery pack 14A may include a high-power battery pack with a nominal voltage of 18V and a slide-on configuration, and the second battery pack 14B may include a high-power battery pack with a nominal voltage of about 12 volts (V) and having a tower-style configuration. In other constructions (not shown), the battery packs 14A, 14B may be the same type of battery pack.

Each battery pack 14A, 14B is connectable to and operable to power various motorized power tools (e.g., a cut-off saw, a miter saw, a table saw, a core drill, an auger, a breaker, a demolition hammer, a compactor, a vibrator, a compressor, a drain cleaner, a welder, a cable tugger, a pump, etc.), outdoor tools (e.g., a chain saw, a string trimmer, a hedge trimmer, a blower, a lawn mower, etc.), other motorized devices (e.g., vehicles, utility carts, a material handling cart, etc.), and non-motorized electrical devices (e.g., a power supply, a light, an AC/DC adapter, a generator, etc.).

With reference to FIG. 1, in one embodiment, the charger 10 includes a housing 18 having a first end 20, a second end 22 opposite the first end 20, a front side 24, a rear side 26 opposite the front side 24, a top side 28, and a bottom side 30 opposite the top side 28. The housing 18 defines a longitudinal axis or first axis 32 that extends generally between the first end 20 and the second end 22. The housing 18 also defines a lateral axis or second axis 34 that extends generally between the front side 24 and the rear side 26, and generally perpendicular to the first axis 32. The housing 18 further defines a vertical axis or third axis 36 that extends generally between the top side 28 and the bottom side 30.

With continued reference to FIG. 1, the charger 10 also includes a first charging bay 37A and a second charging bay 37B that are each operable to mechanically and electrically couple to the battery pack 14A to facilitate pack charging. Each charging bay 37A, 37B includes a respective support structure 38A, 38B that is mechanically engageable with the battery pack 14A, and a respective terminal block 39A, 39B that is both mechanically and electrically engageable with the battery pack 14A. The support structures 38A, 38B are both provided at the top side 28 of the housing 18, with the first support structure 38A located nearest to the first end 20 and the second support structure 38B located nearest to the second end 22. With reference to FIG. 3, in another embodiment, one or more of the charging bays 37A, 37B can alternatively include a combination support structure 38C that is engageable with each of the battery packs 14A, 14B. The combination support structure 38C can be provided in place of the first support structure 38A, or in place of the second support structure 38B, or in place of both support structures 38A, 38B. The battery support structures 38A, 38B, 38C are operable to form releasable mechanical connections between the battery packs 14A, 14B and the charger 10. Each terminal block 39A, 39B is located adjacent its corresponding support structure 38A, 38B. Each terminal block 39A, 39B includes a plurality of block terminals (not shown) for connecting to respective pack terminals (not shown) provided on the on the battery pack 14A to electrically connect the battery pack 14A to the charger 10.

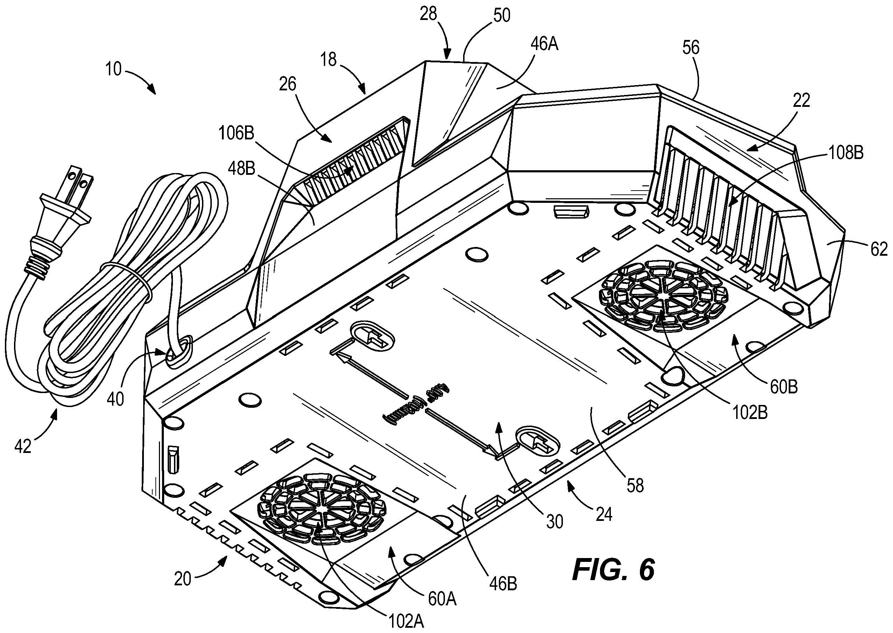

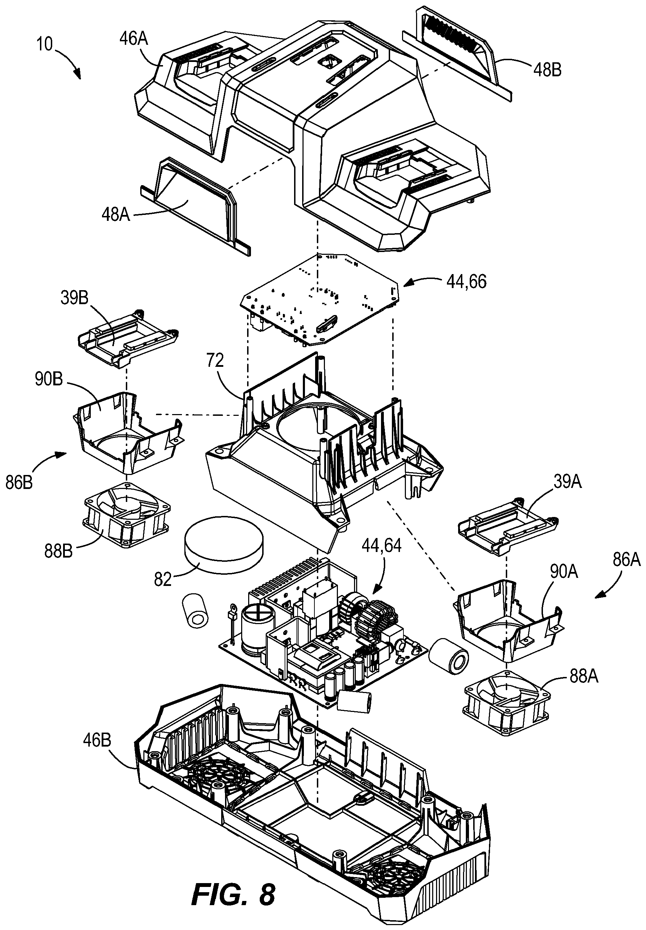

With reference to FIGS. 6-8, the charger 10 also includes a power input port 40 for connection to a power supply (e.g., through a power cord 42), and charger electronics 44 operable to output a charging current to one or both of the batteries 14A, 14B to charge the batteries 14A, 14B. The power cord 42 extends from the charger electronics 44 within the housing 18 (FIG. 6) through the power input port 40 to the power source.

With reference to FIGS. 1 and 6-8, the housing 18 is formed as an assembly and includes an upper housing member 46A, a lower housing member 46B, a first handle member 48A, and a second handle member 48B. The upper housing member 46A is coupled to the lower housing member 46B (e.g., by fasteners (not shown)), and the handle members 48A, 48B are held between the upper and lower housing members 46A, 46B at the front and rear sides 24, 26, respectively. The housing members 46A, 46B and the handle members 48A, 48B can be formed of plastic with each molded as a single piece. In other embodiments (not shown), the handle members 48A, 48B may be formed integrally with one or both of the upper and lower housing members 46A, 46B.

The upper housing member 46A includes a top wall 50 that generally extends between the first and second ends 20, 22 and between the front and rear sides 24, 26. The top wall 50 includes a central raised portion 52 protruding upward toward the top side 28, a first lower portion 54A located between the central raised portion 52 and the first end 20, and a second lower portion 54B located between the central raised portion 52 and the second end 22. The upper housing member 46A further includes a top skirt wall 56 that extends generally downward from the top wall 50, i.e., toward the lower housing member 46B, and extends generally about a periphery of the top wall 50.

The lower housing member 46B includes a bottom wall 58 that generally extends between the first and second ends 20, 22 and between the front and rear sides 24, 26. The bottom wall 58 is generally planar except that it defines a pair of recessed regions 60A, 60B located generally toward the front side 24 and toward the first and second ends 20, 22, respectively. The lower housing member 46B also includes a bottom skirt wall 62 that extends generally upward from the bottom wall 58, i.e., toward the upper housing member 46A, and extends generally about a periphery of the bottom wall 58. The bottom skirt wall 62 generally mates with the top skirt wall 56 to form a generally closed cavity within the housing 18.

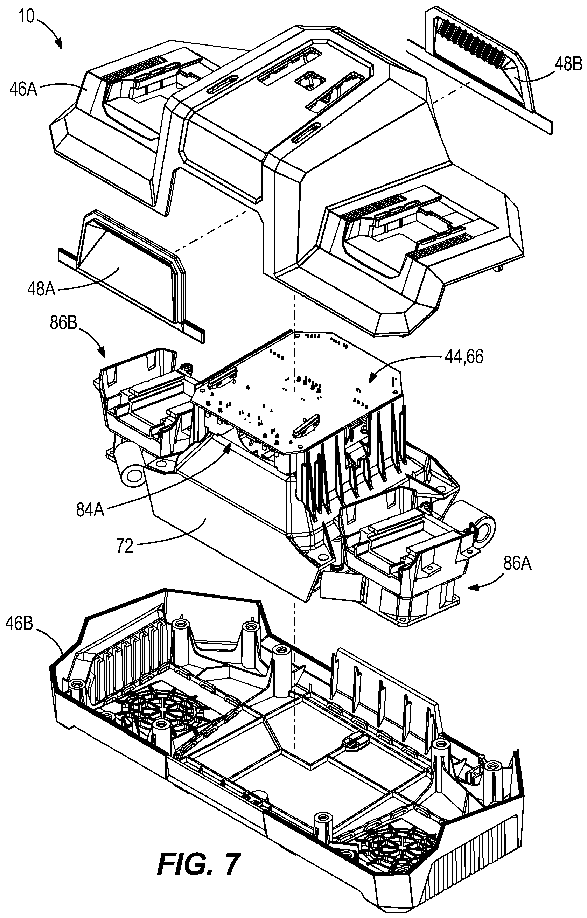

With reference to FIGS. 7-9, the charger electronics 44 are supported within the housing 18 and are operable to output a charging current to one or both of the batteries 14A when coupled to the terminal blocks 39A, 39B. The charger electronics 44 include, among other things a first printed circuit board assembly (PCBA) 64 and a second PCBA 66.

In the illustrated embodiment, the first PCBA 64 is an AC/DC PCBA 64 that is operable to convert an alternating current to a direct current. The first PCBA 64 includes, for example, a transformer 68 and other circuitry to rectify and condition AC power received (e.g., via an AC wall outlet) and to provide DC power out to the second PCBA 66 and other components of the battery charger 10.

The second PCBA 66 is a DC/DC PCBA 66 that is operable to output a DC charging current to one or both of the batteries 14A. The second PCBA 66 includes a charger microcontroller 70. The charger electronics 44 may include a charging circuit for each of the terminal blocks 39A, 39B such that each battery pack 14A coupled thereto may be charged simultaneously and independently. The charging current provided to each battery pack 14A may be the same or different. The microcontroller 70 includes an electronic processor and a memory storing instructions that are executed by the electronic processor to implement the functions of the microcontroller 70 described herein. The microcontroller 70 controls the charging circuits for charging the battery pack(s) 14A coupled to one or both of the charging bays 37A, 37B. For example, the charging circuits may include controllable power switching elements (e.g., field effect transistors, IGBTs, and the like) that the microcontroller 70 selectively enables to provide power from the first PCBA 64 to the respective battery packs 14A. The microcontroller 70 further determines the temperatures of the PCBAs 64, 66 based on an output signal from one or more temperature sensors (not shown), and determines the temperature of the battery packs 14A during charging. Based on the determined temperatures, the microcontroller 70 activates and controls one or more cooling fans, as described in further detail below.

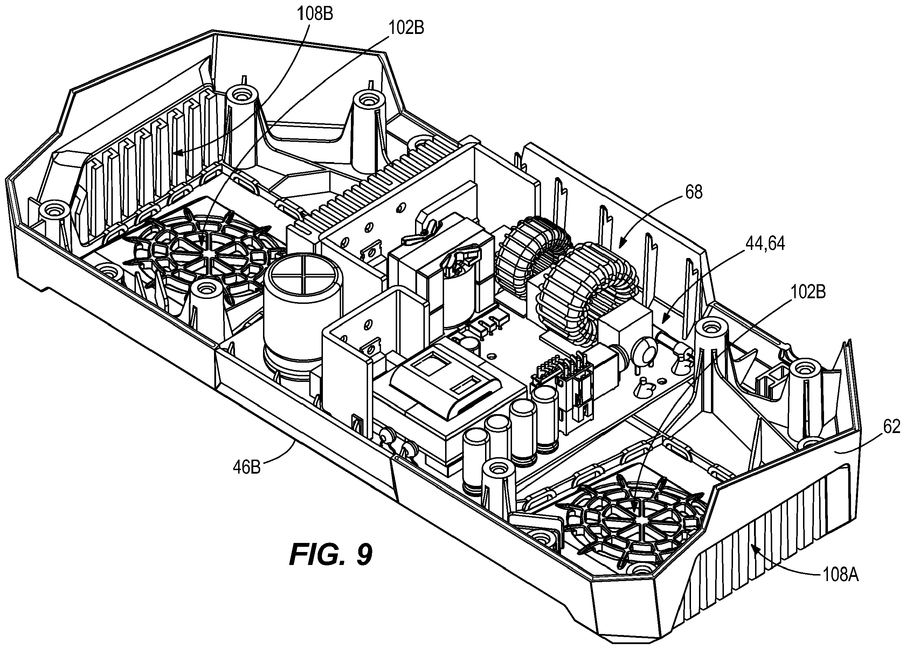

As shown in FIG. 9, the first PCBA 64 is supported within the lower housing member 46B adjacent the bottom wall 58. The first PCBA 64 can be secured to the bottom wall 58 (e.g., via fasteners).

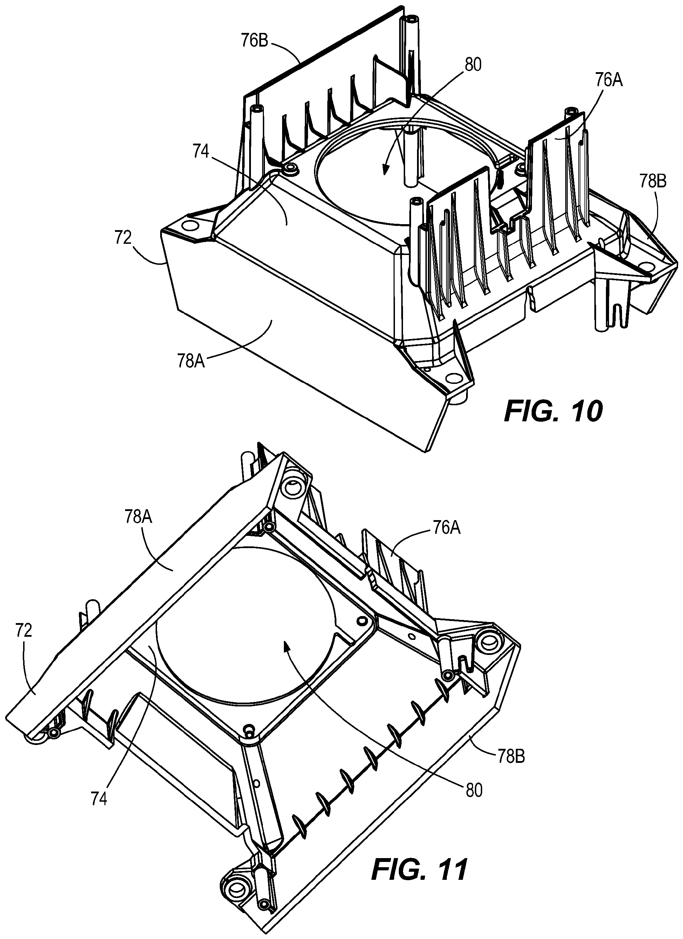

As shown in FIGS. 7, 8, 10, and 11, the housing 18 further includes an internal housing member 72 that is located between the upper and lower housing members 46A, 46B and that supports the second PCBA 66. The internal housing member 72 may be coupled to the upper housing member 46A, to the lower housing member 46B, or to both housing members 46A, 46B by, e.g., threaded fasteners. The internal housing member 72 includes a central wall 74, first and second upper baffle walls 76A, 76B protruding upwardly toward the upper housing member 46A from the central wall 74, and first and second lower baffle walls 78A, 78B protruding toward the lower housing member 46B from the central wall 74. The first and second upper baffle walls 76A, 76B are located toward the first and second ends 20, 22, respectively, of the housing 18, whereas the first and second lower baffle walls 78A, 78B are located toward the front and rear sides 24, 26, respectively. The central wall 74 defines a fan aperture 80 and is further configured to support a charger cooling fan 82 adjacent the fan aperture 80. The second PCBA 66 is supported by the first and second upper baffle walls 76A, 76B with its heat-generating electrical components facing downward, i.e., toward the central wall 74.

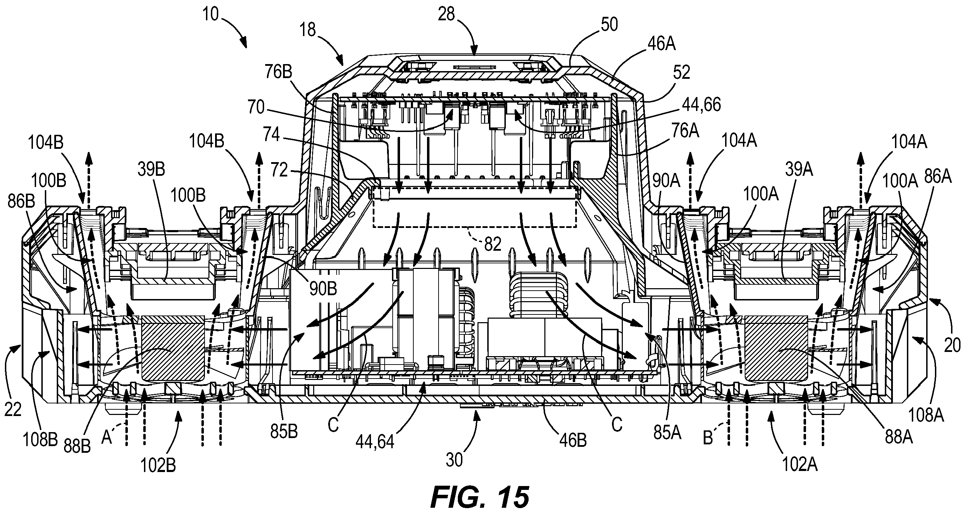

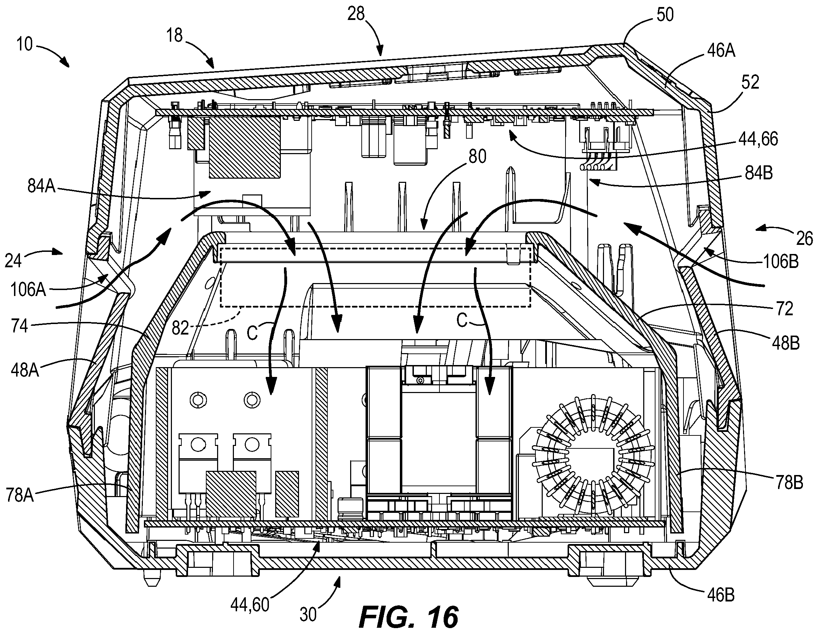

First and second airflow apertures 84A, 84B (FIGS. 7, 16) are defined between the central wall 74, the first and second upper baffle walls 76A, 76B, and the second PCBA 66 and are located proximate the front and rear sides 24, 26 of the housing 18, respectively. Similarly, the first and second lower baffle walls 78A, 78B extend generally toward the first PCBA 64, such that third and fourth airflow apertures 85A, 85B (FIG. 15) are defined between the central wall 74, the first and second lower baffle walls 78A, 78B, and the first PCBA 64. The third and fourth airflow apertures 85A, 85B are located proximate the first and second ends 20, 22 of the housing 18, respectively.

With reference to FIGS. 7, 8, and 12-14, the charger 10 also includes first and second battery fan assemblies 86A, 86B located proximate the first and second charging bays 37A, 37B, respectively. Each of the battery fan assemblies 86A, 86B includes a battery fan 88A, 88B and an airflow duct 90A, 90B. Each battery fan 88A, 88B includes a motor (not shown), an impeller 92, and a shroud housing 94. The airflow duct 90A, 90B is coupled to the shroud housing 94 (e.g., via threaded fasteners), and one of the terminal blocks 39A, 39B is coupled to each airflow duct 90A, 90B generally opposite from the respective battery fan 88A, 88B. Each airflow duct 90A, 90B includes a base wall 96 that defines a fan aperture 97, and first and second baffle walls 98A, 98B extending upward toward the upper housing member 46A from the base wall 96 at two opposite lateral sides of the base wall 96. The first and second baffle walls 98A, 98B extend generally beside the respective terminal block 39A, 39B, so that first and second airflow apertures 100A, 100B are defined between each baffle wall 98A, 98B and the terminal block 39A, 39B. Accordingly, an airflow emitted from the battery fan 88A, 88B flows into the airflow duct 90A, 90B through the fan aperture 97 and exits the airflow duct 90A, 90B through each of the first and second airflow apertures 100A, 100B.

With reference to FIGS. 1 and 6, the housing 18 defines a plurality of air inlets and air outlets by which air may flow into and out of the housing 18 to actively cool the charger 10 and the battery packs 14A. Specifically, the housing 18 defines first and second air inlets 102A, 102B provided within the recessed regions 60A, 60B of the bottom wall 58 of the lower housing member 46B. The first air inlet 102A is located nearer to the first end 20 and under the first charging bay 37A. The second air inlet 102B is located nearer to the second end 22 and under the second charging bay 37B. Since the bottom wall 58 is generally flat, the recessed regions 60A, 60B provide access for air to flow into the first and second air inlets 102A, 102B when the bottom wall 58 is resting against a flat support surface. Each of the air inlets 102A, 102B is defined by a plurality of slots provided in the bottom wall 58 and arranged in a circular profile. The air inlets 102A, 102B are oriented facing generally normal to the third axis 36.

The housing 18 also includes first and second air outlets 104A, 104B provided in the top wall 50 of the upper housing member 46A and adjacent the support structure 38A, 38b, respectively. As will be discussed further below, air flowing into the first air inlet 102A eventually exits the housing 18 via the first air outlet 104A, and air flowing into the second air inlet 102B eventually exits via the second air outlet 104B. Each of the air outlets 104A, 104B is defined by a plurality of slots provided in the top wall 50 and extending on both lateral sides of each of the support structure 38A, 38b, respectively. The air outlets 104A, 104B are oriented generally facing normal to the third axis 36. Air exiting the air outlets 104A, 104B is directed at the battery pack 14A and flows around the battery pack 14A when the battery pack is coupled to the charging bay 37A, 37B.

The housing 18 also includes third and fourth air inlets 106A, 106B provided in each of the handle members 48A, 48B, respectively. Accordingly, the air inlets 106A, 106B are located at the front side 24 and the rear side 26 of the housing 18, respectively, and adjacent the central raised portion 52 of the upper housing member 46A. Each of the air inlets 106A, 106B is defined by a plurality of slots provided in the handle members 48A, 48B and arranged in a rectangular profile. The air inlets 106A, 106B are oriented generally facing normal to the second axis 34.

The housing 18 further includes third and fourth air outlets 108A, 108B provided in the bottom skirt wall 62 of the lower housing member 46B at the first and second ends 20, 22, respectively. As will be discussed further below, air flowing into the third and fourth air inlets 106A, 106B eventually exits the housing 18 via the third and fourth air outlets 108A, 108B. Each of the air outlets 108A, 108B is defined by a plurality of slots provided in the bottom skirt wall 62 at the first end 20 and at the second end 22 of the housing 18. The air outlets 108A, 108B are oriented generally facing normal to the first axis 32.

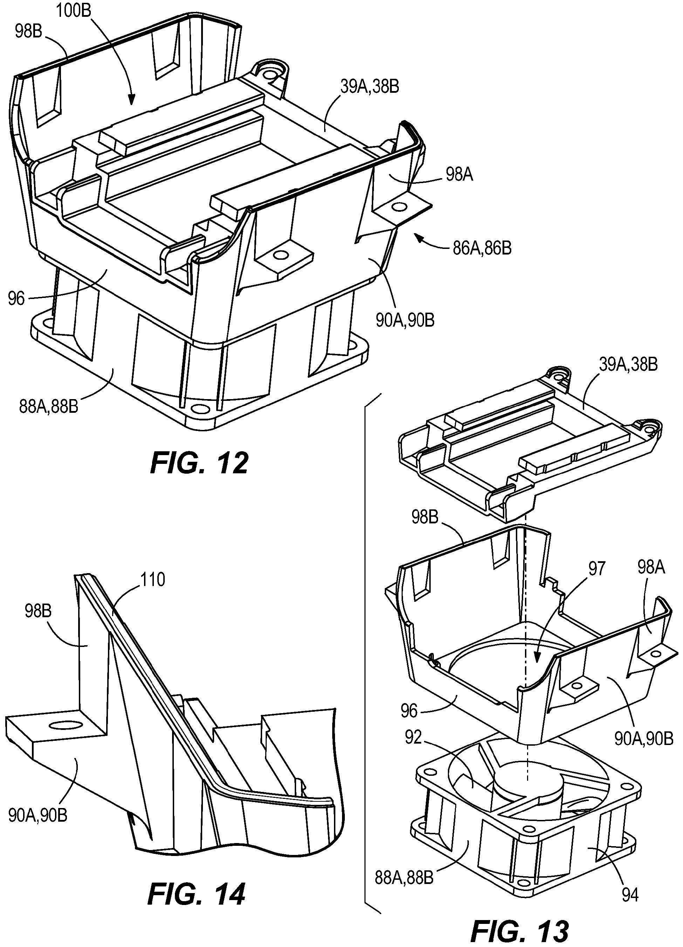

With reference to FIG. 15, the charger 10 defines a first airflow path A (i.e., linear arrows) and a second airflow path B. The first airflow path A extends through the housing 18 between the first air inlet 102A and the first air outlet 104A. The first battery fan 88A is operable to move air along the first airflow path A from the first air inlet 102A upward through the airflow duct 90A, around the first terminal block 39A, through the first and second airflow apertures 100A, 100B, and out the slots of the first air outlet 104A. The air exiting the first air outlet 104A is directed at the battery pack 14A and flows around the battery pack 14A when the battery pack is coupled to the first charging bay 37A. Accordingly, the first battery fan 88A generates a cooling airflow to actively cool the battery pack 14A during charging. In addition, the first battery fan assembly 86A seals the first airflow path A from the rest of the interior of the housing 18 to keep water that might enter through the first air inlet 102A or through the first air outlet 104A from reaching the first PCBA 64 or the second PCBA 66. As shown in FIG. 14, the first and second baffle walls 98A, 98B each include a rib or tongue 110 extending along its end face. The upper housing member 46A includes corresponding grooves (not shown) formed in an inner surface thereof and configured to receive the tongue 110 of the baffle walls 98A, 98B to form a tight tongue-in-groove connection. This helps to seal the baffle walls 98A, 98B against the inner surface of the upper housing member 46A. The second airflow path B is substantially similar to the first airflow path A and flows through the second air inlet 102B, the second battery fan assembly 86B, the second air outlet 104B, and across the battery pack 14A to actively cool the battery pack 14A coupled to the second charging bay 37B.

In some embodiments, each of the battery fans 88A, 88B is a multi-speed fan operable to rotate at more than one speed. The speed at which each fan 88A, 88B rotates may be determined based on a temperature of battery pack 14A coupled to the charging bay 37A, 37B and undergoing charging. When the temperature reaches or exceeds a threshold, the microcontroller 70 can activate the fan 88A, 88B to operate at a corresponding fan speed. For example, when the microcontroller 70 detects a temperature above a first threshold, then the fan 88A, 88B is activated at a first speed or percentage of maximum speed (e.g., about 50% speed). It should be understood that, in other embodiments, the fan 88A, 88B may be activated at a different speed (e.g., more than 50% (100%, 75%, etc.) or less than 50% (25%, 10%, etc.)). Also, the speed of the fan 88A, 88B may be based on the sensed temperature (e.g., higher for a higher temperature or lower for a lower temperature) and/or a duration the sensed temperature exceeds a threshold (e.g., higher for a longer duration or lower for a shorter duration).

With reference to FIGS. 15 and 16, the charger also defines a third airflow path C (i.e., linear arrows) that extends through the housing 18 between the third and fourth air inlets 106A, 106B and the third and fourth air outlets 108A, 108B. The charger cooling fan 82 is operable to move air along the third airflow path C from the third and fourth air inlets 106A, 106B, through the first and second airflow apertures 84A, 84B defined between the upper baffle walls 76A, 76B and the second PCBA 66, and across the components of the PCBA 66. The airflow path C initially extends laterally inward into the housing 18, and particularly into the central raised portion 52 of the upper housing member 46A, along the direction of the second axis 34. The airflow path C then extends downward (i.e., along a direction of the third axis 36) toward and through the fan aperture 80 and the charger cooling fan 82, and toward the first PCBA 64. The third airflow path C then diverges and passes through each of the third and fourth airflow apertures 85A, 85B, respectively, and toward the third and fourth air outlets 108A, 108B along a direction of the first axis 32. The airflow path C then extends around the battery fan assemblies 86A, 86B and exits the housing 18 via the third and fourth air outlets 108A, 108B. Accordingly, the charger cooling fan 82 is operable to move air along the third airflow path C to cool both the first PCBA 64 and the second PCBA 66.

In some embodiments, the charger cooling fan 82 is a multi-speed fan operable to rotate at more than one speed. The speed at which the fan 82 rotates may be determined based on a temperature of one or more of the charger electronics 44. When the temperature reaches or exceeds a threshold, the microcontroller 70 can activate the fan 82 to operate at a corresponding fan speed. For example, when the microcontroller 70 detects a temperature above a first threshold, then the fan 82 is activated at a first speed or percentage of maximum speed (e.g., about 50% speed). It should be understood that, in other embodiments, the fan 82 may be activated at a different speed (e.g., more than 50% (100%, 75%, etc.) or less than 50% (25%, 10%, etc.)). Also, the speed of the fan 82 may be based on the sensed temperature (e.g., higher for a higher temperature or lower for a lower temperature) and/or a duration the sensed temperature exceeds a threshold (e.g., higher for a longer duration or lower for a shorter duration).

Although the disclosure has been described in detail with reference to certain preferred embodiments, variations and modifications exist within the scope and spirit of one or more independent aspects of the disclosure as described. Various features and/or advantages of the disclosure are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A battery charger comprising:
   a housing defining
      a first end, a second end opposite the first end, a front side, a rear side opposite the front side, a top side, a bottom side opposite the top side,
      a first support structure configured to selectively couple to a battery pack, and a second support structure configured to selectively couple to the battery pack,
      a first air inlet located in the front side and a second air inlet located in the rear side, and
      a first air outlet located in the first end and a second air outlet located in the second end;
   charger electronics supported in the housing and operable to output a charging current to charge the battery pack; and
   a fan operable to generate an airflow through the housing, the airflow extending from the first air inlet and the second air inlet to the first air outlet and the second air outlet.
2. The battery charger of clause 1, wherein:
   the housing includes an upper housing member that defines the top side and a lower housing member that defines the bottom side, the lower housing member being removably coupled to the upper housing member; and
   the first air outlet and the second air outlet are defined by the lower housing member.
3. The battery charger of clause 2, wherein the housing further includes a first handle member provided at the front side and a second handle member provided at the rear side, and wherein the first handle member defines the first air inlet and the second handle member defines the second air inlet.
4. The battery charger of clause 2, wherein:
   the housing further includes an interior housing member positioned between the upper housing member and the lower housing member;
   the charger electronics include a first printed circuit board assembly (PCBA) supported by the lower housing member and a second PCBA supported by the interior housing member; and
   wherein the airflow passes by the second PCBA before the airflow passes by the first PCBA.
5. The battery charger of clause 4, wherein the interior housing member supports the fan.
6. The battery charger of clause 1, wherein:
   the housing further defines a first axis extending between the first end and the second end, a second axis extending between the front side and the rear side, and a third axis extending between the top side and the bottom side, with the first axis, the second axis, and the third axis being orthogonal to one another, and
   the first air outlet and the second air outlet are each oriented facing normal to the first axis.
7. The battery charger of clause 6, wherein a largest dimension of the housing is measured between the first end and the second end along the first axis.
8. A battery charger comprising:
   a housing defining
      a first end, a second end opposite the first end, a front side, a rear side opposite the front side, a top side, and a bottom side opposite the top side,
      a first support structure located in the top side and configured to selectively couple to a battery pack, and a second support structure located in the top side and configured to selectively couple to the battery pack,
      a first air inlet located in the bottom side and under the first support structure, and a second air inlet located in the bottom side and under the second support structure, and
      a first air outlet located in the top side adjacent the first support structure and a second air outlet located in the top side adjacent the second support structure;
   charger electronics supported in the housing and operable to output a charging current to charge the battery pack;
   a first fan assembly operable to generate a first airflow extending from the first air inlet to the first air outlet, the first fan assembly including a first fan adjacent the first air inlet and a first duct coupled to the first fan, the first duct extending from the first fan to the first air outlet;
   a second fan assembly operable to generate a second airflow extending from the second air inlet to the second air outlet, the second fan assembly including a second fan adjacent the second air inlet and a second duct coupled to the second fan, the second duct extending from the second fan to the second air outlet;
   wherein the first air outlet directs the first airflow over the battery pack when the battery pack is coupled to the first support structure; and
   wherein the second air outlet directs the second airflow over the battery pack when the battery pack is coupled to the second support structure.
9. The battery charger of clause 8, wherein the first air outlet is defined by a first plurality of slots formed in the top side of the housing and located adjacent the first support structure.
10. The battery charger of clause 9, wherein the first plurality of slots extends on both lateral sides of the first support structure.
11. The battery charger of clause 8, wherein:
   the housing further defines a first axis extending between the first end and the second end, a second axis extending between the front side and the rear side, and a third axis extending between the top side and the bottom side, with the first axis, the second axis, and the third axis being orthogonal to one another, and
   wherein the first air inlet, the second air inlet, the first air outlet, and the second air outlet are each oriented facing normal to the third axis.
12. The battery charger of clause 11, wherein a largest dimension of the housing is measured between the first end and the second end along the first axis.
13. The battery charger of clause 8, further comprising a first terminal block supported by the housing adjacent the first support structure and configured to selectively couple to the battery pack, and wherein the first fan assembly directs the first airflow over the first terminal block.
14. The battery charger of clause 8, wherein the charger electronics includes a microcontroller configured to monitor a temperature of the battery pack and activate the first fan in response to the temperature of the battery pack exceeding a predetermined temperature.
15. A battery charger comprising:
   a housing defining
      a first end, a second end opposite the first end, a front side, a rear side opposite the front side, a top side, and a bottom side opposite the top side,
      a support structure located in the top side and configured to selectively couple to a battery pack,
      a first air inlet located in the bottom side and under the support structure,
      a first air outlet located in the top side adjacent the support structure,
      a second air inlet located in at least one of the front side and the rear side, and
      a second air outlet located in at least one of the first end and the second end;
   charger electronics supported in the housing and operable to output a charging current to charge the battery pack;
   a first fan assembly operable to generate a first airflow extending from the first air inlet to the first air outlet, the first fan assembly including a first fan adjacent the first air inlet and a duct coupled to the first fan, the duct extending from the first fan to the first air outlet; and
   a second fan operable to generate a second airflow through the housing, the second airflow extending from the second air inlet to the second air outlet;
   wherein the duct separates the first airflow from the second airflow.
16. The battery charger of clause 15, wherein:
   the housing includes an upper housing member that defines the top side and a lower housing member that defines the bottom side, the lower housing member being removably coupled to the upper housing member;
   the first air inlet and the second air outlet are defined by the lower housing member; and
   the first air outlet is defined by the upper housing member.
17. The battery charger of clause 15, wherein:
   the housing further defines a first axis extending between the first end and the second end, a second axis extending between the front side and the rear side, and a third axis extending between the top side and the bottom side, with the first axis, the second axis, and the third axis being orthogonal to one another, and
   wherein the first air inlet and the first air outlet are each oriented facing normal to the third axis.
18. The battery charger of clause 17, wherein a largest dimension of the housing is measured between the first end and the second end along the first axis, and wherein the second air outlet is oriented facing normal to the first axis.
19. The battery charger of clause 15, wherein the first air outlet is defined by a first plurality of slots formed in the top side of the housing and located adjacent the support structure.
20. The battery charger of clause 19, wherein the first plurality of slots extends on both lateral sides of the support structure.

## Claims

1. A battery charger comprising:
a housing defining
a first end, a second end opposite the first end, a front side, a rear side opposite the front side, a top side, a bottom side opposite the top side,
a first support structure configured to selectively couple to a battery pack, and a second support structure configured to selectively couple to the battery pack,
a first air inlet located in the front side and a second air inlet located in the rear side, and
a first air outlet located in the first end and a second air outlet located in the second end;
charger electronics supported in the housing and operable to output a charging current to charge the battery pack; and
a fan operable to generate an airflow through the housing, the airflow extending from the first air inlet and the second air inlet to the first air outlet and the second air outlet.

2. The battery charger of claim 1, wherein:
the housing includes an upper housing member that defines the top side and a lower housing member that defines the bottom side, the lower housing member being removably coupled to the upper housing member; and
the first air outlet and the second air outlet are defined by the lower housing member.

3. The battery charger of claim 1 or 2, wherein the housing further includes a first handle member provided at the front side and a second handle member provided at the rear side, and wherein the first handle member defines the first air inlet and the second handle member defines the second air inlet.

4. The battery charger of claim 2 or 3, wherein:
the housing further includes an interior housing member positioned between the upper housing member and the lower housing member;
the charger electronics include a first printed circuit board assembly (PCBA) supported by the lower housing member and a second PCBA supported by the interior housing member; and
wherein the airflow passes by the second PCBA before the airflow passes by the first PCBA,
preferably wherein the interior housing member supports the fan.

5. The battery charger of any preceding claim, wherein:
the housing further defines a first axis extending between the first end and the second end, a second axis extending between the front side and the rear side, and a third axis extending between the top side and the bottom side, with the first axis, the second axis, and the third axis being orthogonal to one another, and
the first air outlet and the second air outlet are each oriented facing normal to the first axis.

6. The battery charger of any preceding claim, wherein a largest dimension of the housing is measured between the first end and the second end along the first axis.

7. A battery charger comprising:
a housing defining
a first end, a second end opposite the first end, a front side, a rear side opposite the front side, a top side, and a bottom side opposite the top side,
a first support structure located in the top side and configured to selectively couple to a battery pack, and a second support structure located in the top side and configured to selectively couple to the battery pack,
a first air inlet located in the bottom side and under the first support structure, and a second air inlet located in the bottom side and under the second support structure, and
a first air outlet located in the top side adjacent the first support structure and a second air outlet located in the top side adjacent the second support structure;
charger electronics supported in the housing and operable to output a charging current to charge the battery pack;
a first fan assembly operable to generate a first airflow extending from the first air inlet to the first air outlet, the first fan assembly including a first fan adjacent the first air inlet and a first duct coupled to the first fan, the first duct extending from the first fan to the first air outlet;
a second fan assembly operable to generate a second airflow extending from the second air inlet to the second air outlet, the second fan assembly including a second fan adjacent the second air inlet and a second duct coupled to the second fan, the second duct extending from the second fan to the second air outlet;
wherein the first air outlet directs the first airflow over the battery pack when the battery pack is coupled to the first support structure; and
wherein the second air outlet directs the second airflow over the battery pack when the battery pack is coupled to the second support structure.

8. The battery charger of claim 7, wherein the first air outlet is defined by a first plurality of slots formed in the top side of the housing and located adjacent the first support structure, preferably wherein the first plurality of slots extends on both lateral sides of the first support structure.

9. The battery charger of claim 7 or 8, wherein:
the housing further defines a first axis extending between the first end and the second end, a second axis extending between the front side and the rear side, and a third axis extending between the top side and the bottom side, with the first axis, the second axis, and the third axis being orthogonal to one another, and
wherein the first air inlet, the second air inlet, the first air outlet, and the second air outlet are each oriented facing normal to the third axis,
preferably wherein a largest dimension of the housing is measured between the first end and the second end along the first axis.

10. The battery charger of claim 7, 8, 9, further comprising a first terminal block supported by the housing adjacent the first support structure and configured to selectively couple to the battery pack, and wherein the first fan assembly directs the first airflow over the first terminal block, and/or
wherein the charger electronics includes a microcontroller configured to monitor a temperature of the battery pack and activate the first fan in response to the temperature of the battery pack exceeding a predetermined temperature.

11. A battery charger comprising:
a housing defining
a first end, a second end opposite the first end, a front side, a rear side opposite the front side, a top side, and a bottom side opposite the top side,
a support structure located in the top side and configured to selectively couple to a battery pack,
a first air inlet located in the bottom side and under the support structure,
a first air outlet located in the top side adjacent the support structure,
a second air inlet located in at least one of the front side and the rear side, and
a second air outlet located in at least one of the first end and the second end;
charger electronics supported in the housing and operable to output a charging current to charge the battery pack;
a first fan assembly operable to generate a first airflow extending from the first air inlet to the first air outlet, the first fan assembly including a first fan adjacent the first air inlet and a duct coupled to the first fan, the duct extending from the first fan to the first air outlet; and
a second fan operable to generate a second airflow through the housing, the second airflow extending from the second air inlet to the second air outlet;
wherein the duct separates the first airflow from the second airflow.

12. The battery charger of claim 11, wherein:
the housing includes an upper housing member that defines the top side and a lower housing member that defines the bottom side, the lower housing member being removably coupled to the upper housing member;
the first air inlet and the second air outlet are defined by the lower housing member; and
the first air outlet is defined by the upper housing member.

13. The battery charger of claim 11 or 12, wherein:
the housing further defines a first axis extending between the first end and the second end, a second axis extending between the front side and the rear side, and a third axis extending between the top side and the bottom side, with the first axis, the second axis, and the third axis being orthogonal to one another, and
wherein the first air inlet and the first air outlet are each oriented facing normal to the third axis,
preferably wherein a largest dimension of the housing is measured between the first end and the second end along the first axis, and wherein the second air outlet is oriented facing normal to the first axis.

14. The battery charger of claim 11, 12 or 13, wherein the first air outlet is defined by a first plurality of slots formed in the top side of the housing and located adjacent the support structure.

15. The battery charger of claim 14, wherein the first plurality of slots extends on both lateral sides of the support structure.
